# EUROPEAN PATENT APPLICATION

(11) **EP 4 762 935 A1**
(43) Date of publication of application: **24.06.2026**
(21) Application number: 24222078.8
(22) Date of filing: 20.12.2024
(51) Int. Cl.: A23B 11/16, A23C 9/20, B65B 55/16

(54) **MILK UV TREATMENT APPARATUS, METHOD FOR TREATING HUMAN MILK AND UV TREATMENT MILK CONTAINER**

(71) Applicant: CARAG AG, 6340 Baar (CH)
(72) Inventor: Christen, Lukas, 6004 Luzern (CH); Bernhard, Jérôme, 8003 Zürich (CH); Larsson, Michael, 6302 Zug (CH); Pradervand, Elena, 8600 Dübendorf (CH); Kessler, Jonas, 8906 Bonstetten (CH)
(74) Representative: Grünecker Patent- und Rechtsanwälte PartG mbB

(57) **Abstract**

The present invention relates to a milk UV treatment apparatus (1) for UV treatment of human milk while agitating the milk contained in a container (30). There is increasing interest in milk treatment methods that could maintain safety without compromising these critical bioactive properties. The apparatus (1) is an automated batch treatment apparatus comprising the following modules for automated batch UV treatment of milk in milk containers (30): a container input module to feed milk containers (30) containing milk into the batch treatment apparatus, or a liquid milk input and filling module (10) for filling milk into milk containers (30) within the batch treatment apparatus, a container UV treatment module (4) comprising UV irradiation means adapted to emit UV light from an UV source (21) to at least one of the milk containers (30) and at least one agitation means adapted to provide movement of the milk in the milk container (30) during UV exposure of the at least one milk container (30), a milk container output module (14) to discharge the UV irradiated milk containers (30) and a displacement means (5) to move the milk containers (30) from one of the aforementioned modules to another one of the aforementioned modules. Further there is provided a Method for Treating Human Milk and UV Treatment Milk Container.

## Description

The present invention relates to the treatment of human milk to inactivate biological contaminants in human milk products. Human milk provides substantial benefits for infant health, particularly for preterm infants, who are more susceptible to infections and developmental complications. It contains essential nutrients and bioactive substances critical for immune function, digestive health, and overall development, making it the preferred choice for infant feeding in neonatal care.

A significant challenge arises when an insufficient supply of mother's own milk (MOM) is available to meet the nutritional requirements of preterm infants. In such cases, human donor milk serves as a valuable alternative, often supplied by human milk banks to supplement or replace MOM as needed. Since donor milk may harbour pathogens, it must undergo treatment to ensure its safety. Holder pasteurization, a method adapted from the dairy industry, is commonly employed by milk banks. This process involves heating the milk to 62.5°C for 30 minutes to inactivate harmful bacteria and viruses. While pasteurization effectively reduces the risk of pathogen transmission from donor to infant, it may also degrade certain bioactive components in the milk, such as immune-modulating proteins, enzymes, and vitamins, which are particularly beneficial for preterm infants.

Consequently, there is increasing interest in alternative methods that could maintain safety without compromising these critical bioactive properties.

Ultraviolet (UV) treatment has emerged as a promising approach, demonstrating the potential for pathogen inactivation while preserving more of the bioactive substances in human milk. Studies indicate that UV treatment may represent a less destructive alternative compared to conventional pasteurization techniques. However, this method is currently restricted to research settings and has not yet been widely adopted in clinical practice.

One prior art reference, WO 2014/094189 A1, describes the inactivation of biological contaminants in a human milk product by exposing the milk to UV light. The apparatus disclosed in this reference comprises of a stand with a base and an integrated magnetic stirrer. The base is configured to securely hold a container placed on it.

The stand further includes an overhead structure equipped with an electrical socket designed to accommodate a UV light source. This overhead structure extends over the container when it is positioned on the base, allowing the UV lamp to pass through an aperture and extend into the container. The lamp is supported and positioned within the container at an appropriate depth to facilitate effective UV treatment.

Despite this prior art, there is currently no known automated method or apparatus for the execution of UV treatment for MOM on a commercial scale.

To solve the aforementioned problem, the present invention provides a milk UV treatment apparatus having the features defined in claim 1.

In particular, this apparatus may be a fully automatic system designed to process human milk in containers. Its primary function is to treat the milk with UV light, which helps with sterilization and the reduction of harmful microorganisms, while simultaneously keeping the milk in motion to ensure even exposure to the UV light. The terms sterilization, pasteurization, (photo-)purification, sanitizing, and disinfection are herein used interchangeably to describe UV treatment aimed at reducing microorganisms. The system performs this process in distinct steps, each carried out by a different module.

The apparatus includes either a container input module or a liquid milk input and filling module. For the container input module, pre-prepared milk containers that already contain milk are fed into the batch treatment apparatus. If the milk is already in bottles or containers, this module feeds them into the system. Alternatively, the apparatus may include a liquid milk input and filling module, which is configured to fill milk into containers within the batch treatment apparatus. Thus, if the milk is in liquid form, this module can fill the containers with milk before proceeding with the treatment.

Additionally, the apparatus provides a container UV treatment module, which treats the milk by exposing it to UV light. This module includes a UV irradiation means and an agitation means. The UV irradiation means may be a UV source that emits light to interact with the milk inside the container, thereby inactivating bacteria and viruses. The agitation means ensures that the milk inside the container is kept in motion during the UV exposure, guaranteeing that all parts of the milk receive sufficient (in particular equal) treatment for inactivating bacteria and viruses. The agitation may involve shaking, rotating, or vibrating the containers to avoid uneven exposure. In some embodiments, the agitation may be performed by a mixer fitted into the container, for example, through the spout, as will be described in greater detail below. In the case that the containers are flexible bags, the agitation means may be an apparatus which applies outside pressure to the exterior of the bags to provide mixing through a kneading motion. This kneading motion uses mechanical pressure and movement on the outside of the flexible bag to mix or homogenize its contents without opening the bag. This method effectively blends the contents while preventing the introduction of air, which could contaminate the material inside. It is a simple and efficient solution, particularly when no specialized mixing equipment is available. However, the application of mechanical pressure to the exterior of the bag is not strictly necessary, as any general agitation means may be provided.

Furthermore, the apparatus includes a milk container output module, which removes the treated milk containers from the system once the UV treatment is complete. For example, the processed containers may be directed to a conveyor belt or a designated storage area.

The apparatus also includes a displacement means, which moves the milk containers between the various modules within the system. This movement may be achieved using one or more robotic arms or conveyor systems, which transfer the containers from the input module to the UV treatment module and subsequently to the output module. As such, it is advantageous that the container input module is positioned upstream of the container UV treatment module, while the milk container output module is situated downstream of the container UV treatment module.

The inventive milk UV treatment apparatus automates the UV treatment of human milk, ensuring efficiency, consistency, and safety. By combining UV light exposure with agitation, the apparatus achieves thorough sterilization and microbial load reduction. It is specifically designed for batch processing, enabling it to handle multiple containers simultaneously and to move the containers through the various stages of the treatment process using automated systems.

The term "modules," as used in the present invention, refers to individual parts or components of a larger system, each designed to perform specific tasks. In this modular system, each module focuses on a particular function, and collectively, the modules work together to form a complete, integrated system. The respective modules can be mounted within a production line in an interchangeable manner, providing flexibility in the system's configuration and functionality. Also, one single module can have the functionality of any of the aforementioned modules in combination with one another.

In a further development of the invention, one or more of the following additional modules can be included to enhance the functionality of the milk UV treatment apparatus. Each additional module introduces a specific capability, increasing the versatility and adaptability of the system for a range of applications.

One such module is a weighing module. This module is designed to obtain information about the weight of the milk in the container. Accurate weight measurement is essential for ensuring quality control, precise portioning, and verification of the milk volume for treatment or distribution. For instance, if a container is intended to hold 100 g of milk, the weighing module can confirm the accuracy of the volume before or after treatment.

Another possible addition is a labelling module. This module enables the apparatus to apply visible information or identification to the milk container through labels, markings, or text. The labels or markings may include RFID tags, QR codes, barcodes, or alphanumeric information. RFID tags are electronic chips used for tracking and identification purposes. QR codes and barcodes are machine-readable formats that allow for quick scanning and retrieval of data. Alphanumeric information, such as dates or identification numbers, provides human-readable details for tracking and record-keeping.

The data included on the labels or markings may include one or more of the following: a unique ID, a date of treatment and/or expression, the applied UV irradiation dose, a use-by date, a weight, a donor and/or recipient ID, a composition of the milk, and/or blockchain information. Blockchain information can encompass details such as the treatment location, identification of the treatment apparatus, the company responsible for the treatment, and specifics about the UV source utilized.

The treatment location can be recorded with precision, specifying not only the geographical area or facility but also the exact room, section, or workstation where the procedure took place. The treatment apparatus is uniquely identified through serial numbers, barcodes, or RFID tags, along with information about the model, make, and technical specifications. Additionally, records of maintenance and calibration may be included to confirm that the apparatus was operating correctly during the treatment.

The responsible treatment company may be documented with its name, certification or accreditation details, and contact information, providing assurance of compliance with relevant regulatory standards. Information about the UV source used during treatment is also captured, detailing the type (such as UV-C lamps or LEDs), wavelength, and power output. This may include the manufacturer's details, batch numbers, and operational parameters like exposure time, distance, and environmental conditions such as temperature and humidity. Furthermore, the lifespan or usage history of the UV source may be recorded to verify its effectiveness at the time of treatment.

The unique ID refers to a specific code used to identify the container. The date of treatment and/or expression indicates when the milk was processed and/or expressed. The applied UV irradiation dose represents the amount of UV light applied during treatment. The use-by date specifies the recommended consumption date. The weight indicates the quantity of milk in the container. The donor and/or recipient ID provides information about the source and/or the intended user. The composition refers to details such as fat, lactose, protein or total solids content. Blockchain information involves securely stored data for tamper-proof tracking and transparency or compliance purposes. These labels ensure traceability, adherence to regulations, and the provision of essential information to users or handlers.

A sample collection module may also be provided. This module is capable of collecting small samples of milk from a specific container.

Furthermore, the apparatus may include a control module. This control module monitors and manages the operation of the entire system, including all other modules. Acting as the central control unit or "brain" of the system, it ensures smooth operation and allows users to adjust settings as necessary. The control module may feature a user interface and a control board running an application to manage the system. Through this module, e.g. users can adjust UV light intensity or treatment time, track the progress of the batch process, and receive alerts if an error occurs. Additionally, e.g. via the control module one or more of the system's modules can be newly integrated (or incorporated) into the apparatus via software, creating a unified operational framework.

These additional modules, whether provided individually or in combination, enhance the efficiency, versatility, and reliability of the apparatus. They enable the system to handle more complex tasks, such as tracking, quality control, and data management, which are essential in professional milk processing environments like hospitals or milk banks. The combination of these features ensures that the apparatus meets the high standards required for such applications.

According to a further development, the input module is equipped with a milk container identification means, to validate milk containers for UV radiation treatment. This mechanism, integrated into the input module or designed as a separate module, checks and validates the milk containers before they proceed to the UV treatment process. It ensures that each container meets the specific criteria for processing, thereby enhancing safety and quality control. The identification may be performed using RFID tags, QR codes, barcodes, or other physical features or through database matching. For containers with RFID tags, the system can scan the tag to confirm its identity or match it with specific records. If the container uses a QR code or barcode, the system scans these codes to retrieve detailed information about the milk, such as its origin, processing date, or contents. For physical feature-based identification, the system may validate the size, shape, or material of the container to ensure compatibility with the apparatus. Additional data from the container can be cross-checked with a database to confirm its eligibility for UV treatment. This feature provides enhanced safety, traceability, proficiency, and efficiency, ensuring that only containers meeting the required standards proceed to UV treatment. This contributes to the overall safety, reliability, and efficiency of the process.

In another further development, the input module further comprises a thawing means, which is designed to defrost milk within the containers. Milk supplied in container form, such as through the container input module, is often stored in a frozen state. The thawing means refers to a system integrated into the input module that gently warms or defrosts the frozen milk, returning it to a liquid state suitable for processing. This ensures the milk is properly conditioned before UV treatment. Several methods may be used for thawing, including warm air circulation, water baths, thermal pads or plates, microwaves, or infrared heaters. Warm air circulation involves blowing controlled warm air around the container to achieve even defrosting. Placing containers in a temperature-regulated water bath allows the milk to be gradually warmed. Heated surfaces, such as thermal pads or plates, may transfer warmth directly to the container. Additionally, systems using microwave or infrared heating may be implemented to efficiently apply heat without damaging the milk. Regardless of the method used, the thawing process is e.g. carefully monitored to prevent overheating or degradation of the milk's nutritional and biological properties.

The system ensures the milk reaches a temperature suitable for UV treatment, such as a slightly chilled or room-temperature state. Milk donated to milk banks is often frozen to preserve its freshness and safety during transportation. Before processing, the frozen milk containers are placed in the input module, where the thawing means gently defrosts them, preparing the milk for subsequent treatment.

According to a further development, when the pooled milk input and filling module is used instead of the container input module, the pooled milk input and filling module may include additional functionalities designed to enhance the quality and safety of the milk during processing. These features include air evacuation and/or replacement means, as well as the sealing means.

The air evacuation and/or replacement means manage the air within the milk container during the filling process. This system can either remove the air entirely or replace it with a protective gas. Air evacuation involves using a vacuum pump to remove the air from the container or by squeezing the air out, thereby reducing the presence of oxygen. This minimizes oxidation, which can degrade the milk's properties or lead to spoilage. Once the air has been evacuated, it may be replaced with a protective gas such as nitrogen or carbon dioxide. These gases act as barriers against bacteria and oxidation, helping to preserve the milk's freshness and quality.

The aforementioned air evacuation and/or replacement means is not only provided in situations where pooled milk is fed to the apparatus and a pooled milk input and filling module is provided. Such an evacuation and/or replacement means can also be provided as a standalone module or as part of another module, e.g., in situations where the milk has already been fed to the apparatus in containers. Such an evacuation and/or replacement means can thus also be a part of the container input module. The sealing means ensures that the milk containers are closed securely after the filling process, protecting the milk from contamination and maintaining its sterility. After the container is filled and the air has been evacuated or replaced, the sealing system securely closes the container using one or more methods, including caps, heat seals, snap-on lids, or crimped lids. A cap is a tight-fitting lid, while heat sealing involves melting a protective film or cap onto the container's opening. Snap-on or crimped lids are mechanically secured covers that provide a strong seal.

According to a further development, the UV source in the UV treatment module is specifically designed to emit ultraviolet light for the effective treatment of milk. Research has shown that it is advantageous to select a wavelength within the range of 200 nanometers (nm) to 280 nanometers (nm), with a preferred wavelength of 254 nanometers ± 15 nanometers.

Different technologies can be utilized to generate the UV light required for this process. Examples of suitable UV light sources include low-pressure mercury vapour lamps, UV light-emitting diodes (UV LEDs), and field emission technology. A low-pressure mercury vapour lamp is a traditional UV light source that produces UV light by passing an electrical current through mercury vapour at low pressure. It is particularly effective in generating UV light at specific wavelengths, notably around 254 nanometers. UV LEDs, on the other hand, are modern, energy-efficient light sources that emit UV light within a narrow wavelength range. They are compact, durable, and can be engineered to emit light precisely within the required spectrum. Field emission lighting technology represents an advanced option, using electron emissions to generate UV light. This technology offers high efficiency, a long lifespan, and flexibility in wavelength selection.

The preferred wavelength range of 200 nanometers to 280 nanometers is known as the UVC range. This range is highly effective for inactivating microorganisms, including bacteria and viruses. The most preferred wavelength, 254 nanometers ± 15 nanometers, is particularly significant as it aligns with the peak absorption of DNA and RNA in microorganisms. At this wavelength, UV light disrupts the genetic material of microbes, rendering them inactive or incapable of reproduction.

The flexibility offered when selecting the type of UV source allows the apparatus to achieve an optimal balance between performance, energy efficiency, and longevity. The chosen wavelength ensures maximum effectiveness when sterilizing the milk by inactivating harmful microorganisms, while the variety of UV technologies provides adaptability to meet different operational and efficiency requirements.

According to a further embodiment, the UV treatment module may include at least one of the following features: a shutter, a user protection means, a cooling means, and a measurement means.

A shutter may be positioned between the UV light source and the milk containers to regulate the amount of UV light each container receives. The shutter operates by opening or closing to allow or block UV light, and its function is controlled automatically to ensure precise exposure times for each container. This prevents overexposure, ensuring that the milk receives the optimal amount of UV light to avoid compromising its quality. The shutter may provide one or both of the following advantages during the operation of a UV treatment system. Firstly, it allows for controlled and uniform exposure to UV light by eliminating any inconsistencies caused by the warming-up phase of the UV source. This ensures that the UV light intensity remains consistent and effective from the beginning of the treatment process, leading to reliable and uniform results. Secondly, the shutter helps to extend the lifespan of the UV source by reducing the need for frequent switching on and off. Such frequent cycling can cause wear and tear to the UV source, potentially shortening its operational life. By using the shutter to manage exposure, the system can keep the UV source in a steady state, optimizing its longevity and performance.

For example, if a batch of milk requires 30 seconds of UV exposure, the shutter will remain open for 30 seconds and then close, effectively ending the exposure.

User protection means are designed to safeguard users from accidental exposure to harmful UV radiation during operation. These safety measures may include physical barriers, such as enclosures surrounding the UV source, or interlocks that automatically deactivate the UV light when the apparatus is accessed. For instance, if a user opens the apparatus while it is running, the interlock will immediately shut off the UV light, preventing any accidental exposure to harmful radiation.

The cooling means ensures that the milk and the UV-source remain at a controlled temperature during UV treatment to prevent overheating. This may involve the use of chilled air, fans, water cooling, or thermoelectric cooling systems to maintain the milk's temperature within safe limits. For instance, if the UV light generates heat during operation, the cooling system can maintain the milk at a consistent temperature, such as 4 degrees Celsius, throughout the process.

The measurement means monitors critical parameters during the UV treatment to ensure its effectiveness and reliability. These parameters may include the intensity of the UV light, the temperature of the milk, and the total exposure time to the UV source. By measuring the intensity of the UV light, the system ensures that it is at the required level for effective microbiological inactivation. Monitoring the temperature ensures that the milk remains within a safe range during treatment. Additionally, tracking the exposure time guarantees that each container receives precise UV treatment.

The measurement means may also track the total runtime of the UV source, allowing the system to predict when maintenance or replacement is necessary. For example, if the intensity of the UV light drops below the required level, the system alerts the operator, ensuring that the milk is not under-treated and that the process remains consistent and safe.

According to a further development, the aforementioned sample collection module comprising one or more of the following: sampling means and/or sample analyzing means. The sampling means is designed to isolate and extract a specific portion of milk from the container as a sample. In this embodiment, a section of the milk container may be designated as a sample compartment. The system may seal off this compartment, separating the sample from the rest of the milk. The sealed sample can then be removed for testing and storage while ensuring that the remaining milk in the container is neither used for testing nor exposed to contamination. This process precisely defines the quantity of the sample, which is essential for consistent testing, and ensures the sample is collected in a sterile and controlled manner. For example, in the case of a flexible bag, a section may be partitioned and sealed using heat or a mechanical clamp to create a sterile, pre-measured sample suitable for later analysis. However, it is not necessary that the sampling means has the aforementioned configuration, it can also just take a sample of the treated milk.

The sample analyzing means is designed to assess the composition and quality of the collected milk samples. It can measure various components critical to the milk's safety and nutritional value. These components may include one or more, or all of the following; fats, carbohydrates, proteins, residual microorganisms, and total solids. For instance, it may determine the fat content, which is vital for nutritional labelling and dietary requirements. The sugar content, such as lactose, can be measured to ensure nutritional consistency. Protein levels may also be verified to meet specific dietary and quality control standards. Additionally, the analyzing means can detect the presence of bacteria, viruses, or other microorganisms to ensure the milk's safety. It can measure the combined amount of solid components, such as fats, proteins, and minerals, to evaluate the milk's overall quality and consistency.

The sample analyzing means may utilize techniques such as spectroscopy, chromatic assays, or microbiological methods to conduct the analysis. For example, once the sample is collected, the system may use an onboard analyzer to measure the fat and protein levels, confirming they align with expected nutritional values. However, as long as the section of the milk container has a sample compartment, such analyzations within the apparatus are not necessary. Such a test can also be carried out later, when the milk is used.

Sampling in the UV treatment process may serve two distinct purposes.

Before the UV treatment, a sample may be taken to determine the total solids content of the milk. This measurement is beneficial because the solids content directly affects the UV dosage required for effective treatment. By analyzing this pre-treated sample, the treatment time can be adjusted to ensure the optimal reduction of microorganisms while preserving the milk's quality.

After the UV treatment, another sample can be taken to assess the composition of the milk that will be fed to the infant. This post-treatment analysis ensures the milk meets all safety and quality standards. Furthermore, based on the composition of the milk, it may be fortified before consumption/feeding the infant. This fortification process involves adding essential nutrients or other components to enhance the milk's nutritional value, ensuring it aligns with the specific dietary needs of the infant and supports their healthy growth and development.

Therefore, the aforementioned sample analyzing means can be integrated into the apparatus either upstream and/or downstream of the container UV treatment module. This sample analyzing means can also function as a standalone module or be incorporated into any other module within the apparatus. Furthermore, the same sample analyzing means may be utilized for both pre-treatment and post-treatment analysis, ensuring flexibility and efficient use of the system's resources.

According to a further aspect, at least the UV treatment module and the displacement means are housed within a protective cabinet. The container input module or pooled milk input and filling module, along with the milk container output module, are thus e.g. positioned on the interface of this protective cabinet. The protective cabinet provides a secure and controlled environment for critical processes such as UV treatment and milk container movement, ensuring safety and preventing contamination.

The UV treatment module and the displacement means are contained within the protective cabinet, while the container input or pooled milk input and filling module and the milk container output module may be accessible from the cabinet's interface. During operation, the user places the milk container into the input module at the interface. The system then e.g. automatically transfers the container inside the cabinet for UV treatment. Once the process is complete, the container is moved to the output module, where it can be retrieved. This design ensures that the internal processes remain shielded from the external environment, maintaining sterility and operational integrity throughout the treatment process.

According to a coordinated aspect of the invention, a container UV treatment device is provided, having the features defined in claim 10. The container UV treatment device comprises a UV irradiation means, a support, and an agitation means. The UV irradiation means is designed to emit UV light for treating milk within milk bags (which are examples of containers). The emitted UV light penetrates the bag to inactivate harmful microorganisms such as bacteria and viruses in the milk. The UV source is calibrated to emit light at an effective wavelength, preferably within the range of 200 to 280 nanometers, which is ideal for sterilization. Any of the aforementioned UV sources can be used. The support provides a stable base to hold and position the milk bags during the UV treatment process. It is designed to accommodate the flexible structure of milk bags, ensuring they remain securely positioned for even exposure to UV light. The agitation means ensures the milk inside the bag moves during UV treatment to facilitate uniform exposure to the UV light. This agitation may involve applying outer pressure to the milk bag, altering its shape to create movement of the milk within. Methods of agitation could include compression (squeezing the bag), pulsing (applying rhythmic pressure changes), or vibrating (oscillating the bag). Such movement eliminates shadow zones where parts of the milk might otherwise receive insufficient UV exposure. For instance, a milk bag containing 200 millilitres of human milk placed on the support undergoes UV irradiation while the agitation means compresses and releases the bag, ensuring the milk circulates and all parts are exposed to the UV light. However, the agitation means is not delimited to such a specific configuration, and any of the aforementioned configurations, including mixing with a mixer can be used. The features of this container UV treatment device may be integrated into the system as defined in claims 1 to 9, but is also claimed as a standalone device.

According to a further coordinated aspect as defined in claim 11, a method is provided for treating human milk via UV irradiation. This method may utilize the modules described in the aforementioned apparatus, incorporating their functions as steps in the method. The process is e.g. fully automated and conducted in batches. Initially, the milk is fed into the UV treatment apparatus. This is followed by UV irradiation treatment with agitation, and finally, the treated milk containers are discharged.

Milk can be fed into the UV treatment apparatus in one of two ways, prefilled milk containers already containing milk may be loaded into the system, or liquid milk may be poured into empty containers within the apparatus before the treatment begins. For example, a batch of milk bags or bottles (which are examples of containers) can be loaded into the input module, or milk from a bulk source can be automatically dispensed into containers that are at least food grade or are already sterile. During the UV irradiation treatment, the milk inside the containers is exposed to UV light to sterilize it. Simultaneously, the milk is agitated to ensure continuous movement, exposing all parts of the milk to the UV light and eliminating shadowing. Once the UV treatment is complete, the system automatically transfers the treated milk containers to the output module for storage, labelling, and/or distribution, ensuring a seamless workflow. This method may process multiple containers simultaneously, enhancing efficiency and consistency. Automation reduces the need for manual intervention, ensuring precise and repeatable results. By combining UV light with agitation, the method achieves uniform treatment while maintaining the quality and sterility of the milk.

According to a further development of this method, the method may include additional steps to enhance monitoring, control, and data management. These steps may involve controlling UV exposure during irradiation, weighing milk containers, applying visible markers or identification labels, collecting samples from selected containers, and integrating monitoring and control modules with data transmission capabilities. Controlling UV exposure ensures optimal sterilization without overexposure, which could degrade the milk's quality. For instance, the aforementioned shutter system may regulate the UV exposure for each container based on predefined treatment requirements. Weighing the milk containers before and after UV treatment ensures portion accuracy and compliance with quality standards. Applying visible markers or labels, such as RFID tags, QR codes, barcodes, or alphanumeric data, enhances traceability and identification.

Quality control may involve collecting a sample from a randomly selected container for analysis. For example, a small portion of milk can be extracted to test for residual microorganisms or macro-nutrient content. Monitoring and control modules allow data transmission to external systems, such as databases or computers, for logging and analysis, facilitating automation and data-driven decision-making.

According to another coordinated aspect, a UV treatment milk container is provided with the features defined in claim 13.

The feature that the container at least partially incorporates a UV-transparent sheet means that it is not necessary for the entire container to be made of UV-transparent material. For example, the container can be constructed from two sheets, which may also be multilayer sheets, welded around their periphery to create a compartment for storing the milk. Between these sheets, one may be UV-transparent while the other is UV-opaque. For instance, the UV-opaque sheet could serve as the backside of the container.

Additionally, there may be scenarios where laminate sheets are used, featuring a UV-transparent window while the remaining material surrounding the window is UV-opaque. This design allows for precise exposure to UV light while maintaining the structural integrity and other functional properties of the container. However, this container is specifically designed for the efficient sterilization of milk using UVC light. It comprises a body, being a bag, defining an inner volume to hold milk, constructed from a flexible material that is suitable for UV treatment (transparent for UV rays). The container material allows, in particular, UV-C light in the 200 to 280 nanometer range to penetrate efficiently. A particularly effective transmissibility is achieved at 254 nanometers ± 15 nanometers, the wavelength most effective for inactivating microorganisms.

Materials such as PTFE, FEP, PET, quartz-infused polymers, PMP, COP, and COC may be used for the container, with FEP or PTFE preferred for their superior transparency, flexibility, food safety, and resistance to degradation.

The materials mentioned are specialized polymers and compounds, each with unique properties that make them suitable for various industrial applications, particularly in container manufacturing. PTFE, or polytetrafluoroethylene, is well-known for its exceptional resistance to heat, chemicals, and degradation, as well as its non-stick properties and high flexibility. FEP, or fluorinated ethylene propylene, is a derivative of PTFE that offers similar chemical resistance and durability while being more flexible and transparent, which makes it ideal for applications requiring superior optical clarity.

PET, or polyethylene terephthalate, is a thermoplastic widely used for its strength, transparency, and excellent barrier properties against moisture and gases, commonly found in packaging. Quartz-infused polymers, which combine quartz with polymers, enhance thermal stability, mechanical strength, and optical clarity, making them suitable for high-performance uses. Polymethylpentene (PMP) is another lightweight and transparent thermoplastic that provides excellent chemical resistance and thermal stability, often used in laboratory and medical settings due to its clarity and low density.

Cyclic olefin polymer (COP) and cyclic olefin copolymer (COC) are advanced materials known for their transparency, chemical resistance, and low moisture absorption. COP is widely used in optical and medical applications, while COC enhances impact resistance and optical clarity, making it a popular choice for medical devices and pharmaceutical packaging. Among these materials, FEP and PTFE are particularly valued for their superior transparency, flexibility, and resistance to degradation, making them preferred options for containers used in demanding environments.

Other materials are PE, PA, PP, EVA, clear silicone. Polyethylene (PE) is one of the most widely used plastics, valued for its flexibility, toughness, and resistance to chemicals and moisture. It is often used in containers, films, and packaging materials due to its durability and cost-effectiveness. Polyamide (PA), commonly known as nylon, is a strong and resilient material with excellent wear resistance and high thermal stability, making it ideal for engineering and industrial applications. Polypropylene (PP) is another versatile thermoplastic, prized for its lightweight nature, high chemical resistance, and ability to withstand repeated stress, making it suitable for both rigid and flexible packaging. Ethylene-vinyl acetate (EVA) is a copolymer that combines elasticity and durability, offering softness, clarity, and resistance to stress cracking. EVA is often used in applications requiring flexibility, such as medical devices or cushioning materials. Clear silicone stands out for its exceptional flexibility, biocompatibility, and resistance to extreme temperatures. It is widely used in medical, food-grade, and high-performance industrial applications, particularly where transparency and resilience are crucial. These materials, with their diverse properties, offer a wide range of solutions for various design and functional requirements in container manufacturing and other fields.

The materials for the milk container may be provided as layers, with the bag constructed from multiple layers of said materials or a combination of layers from any of the aforementioned materials. This multilayer configuration enhances the durability, functionality, and UV transparency of the container, ensuring optimal performance during UV treatment.

According to a further development, the container may include one or more of the following features: a pouring spout, a dual (or multiple) volume design with a main inner volume and at least one sample volume, a sample collection module integrated into the spout, a label area, a stand feature, a stand and stack design, a spout interfaced for feeding or pump assisting, a visible sealing means on the spout, a spout with a puncturable system, and outer weld lines with rounded edges. These features can be provided individually or in combination to enhance the functionality, usability, and compatibility of the container.

The pouring spout facilitates the transfer of milk into and out of the container. It can be sealed or sealed off to maintain sterility and may be designed to allow the insertion or extraction of agitation means during UV treatment. However, as described earlier, it is not necessary to provide an agitation means within the container, as agitation can also occur outside the container without insertion through the spout. The spout may be equipped with a cap that can be opened for pouring milk or connecting to other systems, such as pumps.

The dual (or multiple) volume design separates the main storage area of the milk from at least one smaller sample compartment. For instance, two weld lines may define the boundaries of the sample volume and the main storage area, with a separation line between them. This design allows for the collection of a treated milk sample for testing without disturbing the main milk volume. An example of this is a bag with a dedicated sealable pocket for easy sample extraction. At the pocket's region, two weld lines delineate the sample volume from the main storage area, creating a separation line between the two.

The sample collection module integrated into the spout simplifies the process of collecting milk samples directly from the container. This module may include a small outlet on the spout, specifically designed for precise sample collection using syringes or an automatic system.

A label area may be provided for labelling and tracing purposes. In this area, human-readable information such as donor ID and treatment data can be displayed, along with machine-readable data like barcodes or QR codes. For instance, a designated section of the bag may be designed for attaching a printed or laser marked label or for writing important details.

The stand feature allows the milk container to stand upright, ensuring stability during filling and storage. This stand may be integrated into the bottom of the bag to provide a flat base or designed to enable the bag to remain upright on a flat surface, simplifying handling and minimizing spills. The stand and stack design further facilitates the storage and transport of multiple milk containers. The stand may be part of a transport post for safe handling, while a stack may consist of storage boxes to efficiently organize and transport multiple filled bags. For example, milk bags can be stored in stackable containers that are easy to handle and organize.

A spout interface for feeding or pump assistance allows a direct connection to feeding systems or breast pumps. For example, a spout may be designed to attach to a breast pump, enabling the direct transfer of milk into the bag.

A visible sealing means on the spout ensures that the spout is securely sealed and tamper-evident. This provides a clear indicator of the integrity of the container. For instance, the spout may be sealed with a tamper-proof cap or a heat-sealed film. A spout with a puncturable system allows for the insertion of a needle or similar device for accessing the milk while maintaining integrity.

The outer weld lines with rounded edges create a durable, smooth, and enclosed compartment for the milk. These welds connect the two-layer sheets of the bag and form rounded edges for safety and durability. The rounded edges reduce the risk of punctures or tears during handling. The outer weld lines with rounded edges, particularly the inner edges at the periphery of the inner compartment storing the milk, may be designed to ensure that the inner volume of the compartment has no shadows or undercuts. This design feature promotes uniform exposure to UV light within the compartment, enhancing the effectiveness of the treatment and ensuring consistent quality and safety of the milk.

According to a further preferred embodiment, the milk bag may be constructed from at least one sheet of flexible polymer material with a thickness in the range of 50 micrometers (µm) to 200 micrometers (µm). Further preferred thickness ranges are 70 micrometers to 120 micrometers, with an even more preferred thickness of 100 micrometers ± 10 micrometers.

The used containers should be transparent to UV light or have UV-transparent regions but can come in various materials and geometries, making them suitable for different applications. One example is plastic bags made from polymer materials (e.g. as described above), which, depending on the thickness and material composition, can transmit UV light effectively. Another common option is quartz bottles, renowned for their exceptional transparency to UV, including UVC wavelengths, and often used in scientific and sterilization processes. Fused silica containers, closely related to quartz, are another excellent choice for UV transmission and are frequently utilized in laboratory settings. These containers are available in various geometries to meet specific needs. Cylindrical bottles and jars are ideal for storing liquids. Additionally, rectangular or cube-shaped containers may be provided. However, the main focus of the present invention is on the utilization of flexible bags.

Further preferred embodiments of the invention are illustrated in the following figures in which it is shown in
[Fig 1] a first embodiment of a milk UV treatment apparatus, demonstrating the supply of milk to the apparatus via a pump;
[Fig 2] a second embodiment, showing frozen milk provided in containers and prepared for treatment;
[Fig 3a] a specific example of a UV treatment module, detailing its structure and functionality;
[Fig 3b] a partial cross-sectional view along the plane XX in Figure 3a, providing additional insight into the internal configuration of the UV treatment module;
[Fig 4] a standalone container UV treatment module, illustrating an independent unit for UV treatment;
[Fig 5] a bag design featuring a separate sample volume/compartment, highlighting the dual-volume configuration for sample extraction;
[Fig 6a] a further embodiment of a bag designed with the capability for puncture through the spout, allowing sterile access to the milk contents;
[Fig 6b] a cap attached to the spout of the bottle shown in Fig. 6a, providing secure sealing and easy access;
[Fig 6c] a top view of the spout, detailing its design and structural elements.

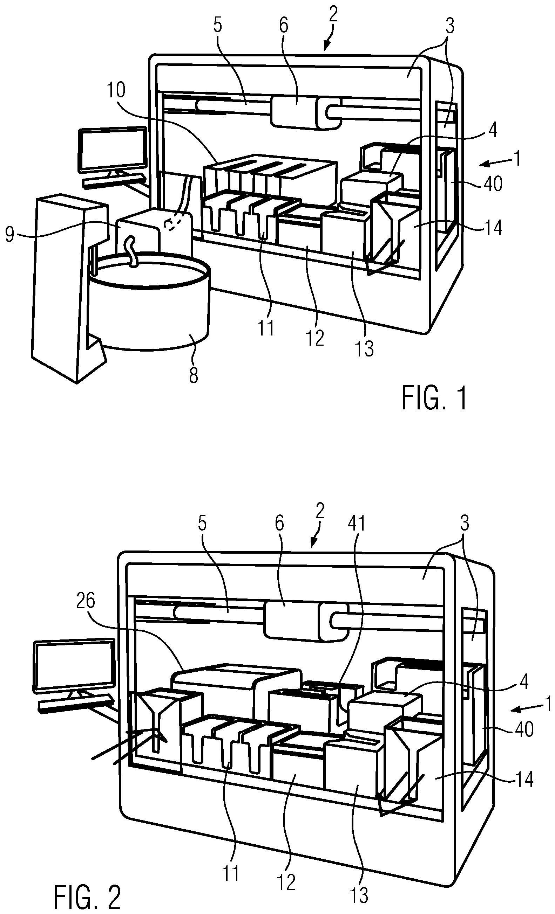

Figures 1 and 2 illustrate two general non-limiting embodiments of a milk UV treatment apparatus 1 designed to operate automatically as a batch treatment system. In the embodiment shown in Figures 1 and 2, the apparatus 1 is housed within a protective housing 2. The housing 2 contains various modules schematically represented in the figures. Transparent windows 3 on the housing 2 allow operators to observe the apparatus's internal processes.

Inside the housing 2, the apparatus includes a container UV treatment module 4 and a displacement means 5. The displacement means 5 is depicted as a system incorporating a movable element 6, which can accommodate a robotic arm (not shown). This setup facilitates the automated transfer of containers through the apparatus.

In the embodiment in Figure 1 pooled milk stored in a large container 8 is pumped into the system via a pump 9. The pump 9 transfers the milk to a liquid milk input and filling module 10, where containers (not shown in the Figure), in this case, flexible bags, are filled with milk. After filling, these bags are stored in a designated storage space 11.

From the storage space 11, the bags move sequentially through other modules (e.g. with the help of the movable element 6 from the displacement means 5). They are first weighed in the weighing module 12 to ensure accurate portioning. The bags are then labelled in the labelling module 13, where identification markers such as barcodes or QR codes are applied. After labelling, the bags proceed to the container UV treatment module 4, where they undergo sterilization. The treated bags are then transferred to a sampling means 40, which is adapted to isolate and extract a specific portion of milk from the container as a sample. In this embodiment, a section of the milk container may be designated as a sample compartment. The sampling means 40 seals off this compartment, separating the sample from the rest of the milk. The sealed sample can then be removed for testing and storage while ensuring that the remaining milk in the container is neither used for testing nor exposed to contamination. The sampling means 40 may be a part of the in the general description described sample collection module.

Finally, the processed bags are moved to the milk container output module 14, and positioned at the exterior interface of the housing 2 for retrieval. The apparatus features two openings in the front window 3: one serving as the inlet for milk (Figure 1) and respective containers (Figure 2) and the other as the outlet for treated containers. In Figure 1, milk is pumped into the apparatus via the inlet, processed through the various modules, and discharged through the outlet.

This modular arrangement ensures a seamless workflow and efficient batch processing.

The term "modules," as used in the present invention, refers to individual parts or components of a larger system, each designed to perform specific tasks. In this modular system, each module focuses on a particular function, and collectively, the modules work together to form a complete, integrated system. The respective modules can be mounted within a production line in an interchangeable manner, providing flexibility in the system's configuration and functionality. Also one single module can have the functionality of any of the aforementioned modules in combination.

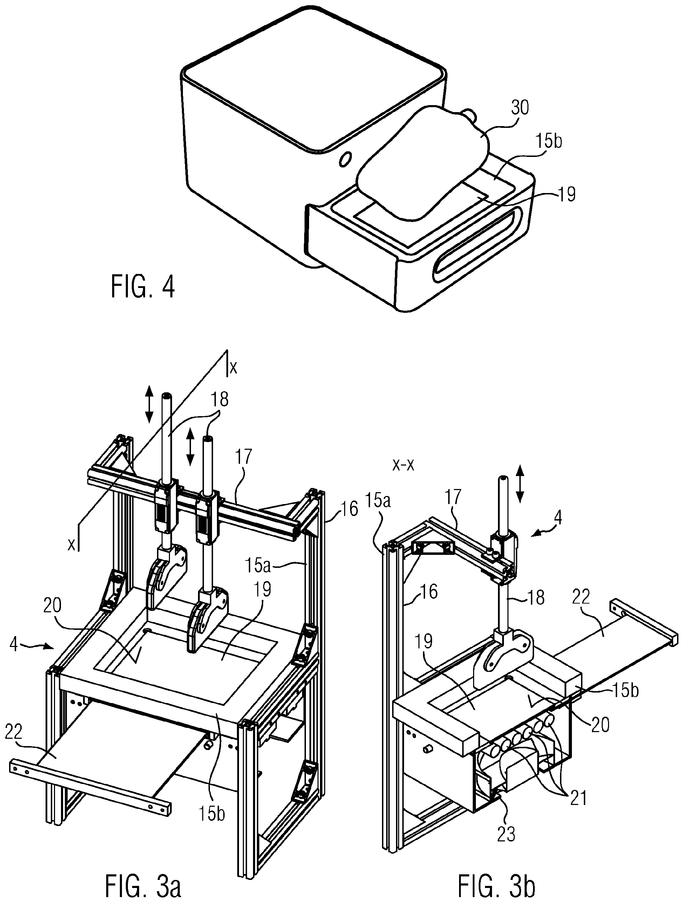

The container UV treatment module 4, as depicted in Figures 3a and 3b, contains components critical to the sterilization process. Figure 3a shows the interior of the treatment module 4. It features a frame 15a that supports a table 15b with a recessed area 19 designed to hold the containers. The bottom 20 of the recess 19 is transparent, allowing UV light from UV sources 21 positioned below to irradiate the containers.

To ensure uniform UV exposure, the container UV treatment module 4 includes an agitation means in the form of two vertically movable arms 18. These arms 18, mounted on a transverse element 17 attached to an upright post 16, apply rhythmic pressure to the exterior of the containers. This motion agitates the milk inside, ensuring even exposure to the UV light and eliminating shadow zones. The container UV treatment module also features a shutter 22 that can block UV light when necessary, enabling precise control over exposure duration. To prevent overheating during UV treatment, a fan 23 provides temperature regulation, maintaining the milk and the UV source within a safe temperature range.

In Figure 2, a variation of the apparatus is shown, where milk is introduced in pre-filled frozen containers such as bags (the containers are not shown in said Figure). These frozen bags are defrosted by a thawing module 26, which replaces the liquid milk input and filling module 10 from the first embodiment. The thawing module 26 gently returns the milk to a liquid state, preparing it for further processing. This embodiment also includes a sample analyzing means 41, allowing milk samples to be extracted for quality control either before or after the UV treatment.

The sampling analyzing means 41 is designed to assess the composition and quality of the collected milk samples. It can measure various components critical to the milk's safety and nutritional value. These components may include one or more or all of the following; fats, carbohydrates, proteins, residual microorganisms, and total solids. For instance, it may determine the fat content, which is vital for nutritional labelling and dietary requirements. The sugar content, such as lactose, can be measured to ensure nutritional consistency. Protein levels may also be verified to meet specific dietary and quality control standards. Additionally, the analyzing means can detect the presence of bacteria, viruses, or other microorganisms to ensure the milk's safety. It can measure the combined amount of solid components, such as fats, proteins, and minerals, to evaluate the milk's overall quality and consistency.

The further modules in Figure 2 are the same as in Figure 1, this the same reference signs are also used there.

Figure 4 presents a standalone container UV treatment module designed for use outside of a batch processing system. This compact module, which is similar to a desktop printer, includes a table 15b with a recess 19 for holding containers, such as a milk bag 20. Agitation can be achieved by either vertically movable arms 18 (not shown) or by vibrating the table 15b itself. The housing on the left side of the module contains the UV source, cooling system, and control mechanisms. This standalone unit provides flexibility for smaller-scale operations or specific use cases.

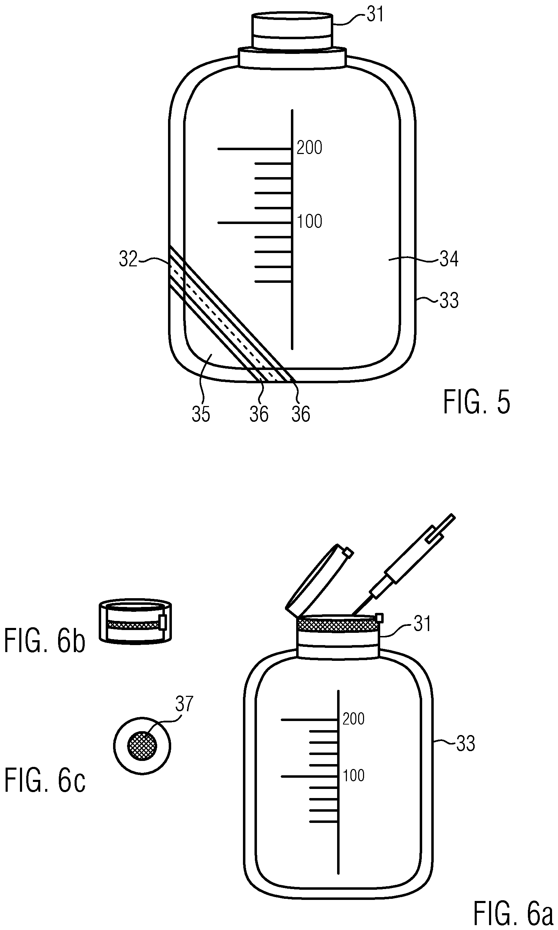

Figure 5 illustrates a flexible milk bag 30 designed with a sample collection volume 35 separated from the main inner volume 34. The separation is achieved using a separation line 32 flanked by weld lines 36. This design enables a sterile sample to be detached for testing without disturbing the main milk volume. The sample volume 35 can be created post-UV treatment via the sampling means 40 in Figures 1 and 2, though the bag may also be used without a sample compartment. The bag has a spout 31 an opening that can be closed by a cap.

Figure 6 shows a further embodiment of a milk bag 30 with a pouring spout 31. The spout 31 in this case is sealed with a visible sealing means 37, such as a tamper-evident cap or heat-sealed film. The spout 31 may also feature a puncturable section for sterile sample extraction using a syringe. This bag shares the same basic structure as the one in Figure 5, including weld lines 33 at its outer circumferential surface, two sheets of film material are welded at said seam 33 to each other to create the volume within the bag.

The material of the bags is at least partially transparent to UV light, enabling effective sterilization.

The container material allows in particular UV-C light in the 200 to 280 nanometer range to penetrate efficiently. A particularly effective transmissibility is achieved at 254 nanometers ± 15 nanometers, the wavelength most effective for inactivating microorganisms.

Materials such as PTFE, FEP, PET, quartz-infused polymers, PMP, COP, and COC may be used for the container, with FEP or PTFE preferred for their superior transparency, flexibility, and resistance to degradation.

The materials mentioned are specialized polymers and compounds, each with unique properties that make them suitable for various industrial applications, particularly in container manufacturing. PTFE, or polytetrafluoroethylene, is well-known for its exceptional resistance to heat, chemicals, and degradation, as well as its non-stick properties and high flexibility. FEP, or fluorinated ethylene propylene, is a derivative of PTFE that offers similar chemical resistance, food safety, and durability while being more flexible and transparent, which makes it ideal for applications requiring superior optical clarity.

PET, or polyethylene terephthalate, is a thermoplastic widely used for its strength, transparency, and excellent barrier properties against moisture and gases, commonly found in packaging. Quartz-infused polymers, which combine quartz with polymers, enhance thermal stability, mechanical strength, and optical clarity, making them suitable for high-performance uses. Polymethylpentene (PMP) is another lightweight and transparent thermoplastic that provides excellent chemical resistance and thermal stability, often used in laboratory and medical settings due to its clarity and low density.

Cyclic olefin polymer (COP) and cyclic olefin copolymer (COC) are advanced materials known for their transparency, chemical resistance, and low moisture absorption. COP is widely used in optical and medical applications, while COC enhances impact resistance and optical clarity, making it a popular choice for medical devices and pharmaceutical packaging. Among these materials, FEP and PTFE are particularly valued for their superior transparency, flexibility, and resistance to degradation, making them preferred options for containers used in demanding environments.

Other materials are PE, PA, PP, EVA, clear silicone. Polyethylene (PE) is one of the most widely used plastics, valued for its flexibility, toughness, and resistance to chemicals and moisture. It is often used in containers, films, and packaging materials due to its durability and cost-effectiveness. Polyamide (PA), commonly known as nylon, is a strong and resilient material with excellent wear resistance and high thermal stability, making it ideal for engineering and industrial applications. Polypropylene (PP) is another versatile thermoplastic, prized for its lightweight nature, high chemical resistance, and ability to withstand repeated stress, making it suitable for both rigid and flexible packaging. Ethylene-vinyl acetate (EVA) is a copolymer that combines elasticity and durability, offering softness, clarity, and resistance to stress cracking. EVA is often used in applications requiring flexibility, such as medical devices or cushioning materials. Clear silicone stands out for its exceptional flexibility, biocompatibility, and resistance to extreme temperatures. It is widely used in medical, food-grade, and high-performance industrial applications, particularly where transparency and resilience are crucial. These materials, with their diverse properties, offer a wide range of solutions for various design and functional requirements in container manufacturing and other fields.

The materials for the milk container may be provided as layers, with the bag constructed from multiple layers of said materials or a combination of layers from any of the aforementioned materials. This multilayer configuration enhances the durability, functionality, and UV transparency of the container, ensuring optimal performance during UV treatment.

The container shall at least partially incorporate a UV-transparent sheet but it is not necessary for the entire container to be made of UV-transparent material. For example, the container can be constructed from two sheets, which may also be multilayer sheets, welded along their periphery to create a compartment for storing the milk. Among these sheets, one may be UV-transparent while the other is UV-opaque. For instance, the UV-opaque sheet could serve as the backside of the container.

Additionally, there may be scenarios where laminate sheets are used, featuring a UV-transparent window while the remaining material surrounding the window is UV-opaque. This design allows for precise exposure to UV light while maintaining the structural integrity and other functional properties of the container.

The milk bag may be constructed from at least one sheet of flexible polymer material with a thickness in the range of 50 micrometers (µm) to 200 micrometers (µm). Further preferred thickness ranges are 70 micrometers to 120 micrometers, with an even more preferred thickness of 100 micrometers ± 10 micrometers.

These embodiments and figures collectively demonstrate the versatility, safety, and efficiency of the milk UV treatment apparatus and its components, ensuring high standards of milk processing, storage, and sterilization.

It should be noted that the specific embodiments described herein are provided for illustrative purposes only and are not intended to limit the scope of the invention. Individual features, elements, or modules described in the various embodiments may be generalized, combined, or modified in any manner consistent with the underlying inventive concepts.

Furthermore, any module or functional unit mentioned in the description can be combined with one or more other modules to form a single module capable of performing multiple functions. Alternatively, each module or functional unit may constitute an invention in its own right.

The invention as disclosed is intended to cover any combination of the modules, elements, or features described herein, whether explicitly stated or understood from the broader context of the invention.

### Reference Signs

- 1: Milk UV treatment apparatus
- 2: Housing

- 3: Transparent window
- 4: Container UV treatment module
- 5: Displacement means
- 6: Movable element
- 8: Large container
- 9: Pump
- 10: Liquid milk input and filling module

- 11: Storage space
- 12: Weighing module
- 13: Labeling module
- 14: Milk container output module

- 15a: Frame
- 15b: Table
- 16: Upright post
- 17: Traverse element

- 18: Arm
- 19: Recess
- 20: Bottom of recess
- 21: UV source

- 22: Shutter
- 23: Fan
- 26: Thawing module
- 30: Bag (Container)

- 31: Spout
- 32: Separation line
- 33: Weld line
- 34: Main inner volume
- 35: Sample collection volume
- 36: Weld line

- 37: Sealing means
- 40: Sampling means
- 41: Sample analyzing means

## Claims

1. Milk UV treatment apparatus (1) for UV treatment of human milk while agitating the milk contained in a container (30), **characterized in that** the apparatus (1) is an automated batch treatment apparatus comprising the following modules for automated batch UV treatment of milk in milk containers (30):
- a container input module to feed milk containers (30) containing milk into the batch treatment apparatus, or a liquid milk input and filling module (10) for filling milk into milk containers (30) within the batch treatment apparatus,
- a container UV treatment module (4) comprising UV irradiation means adapted to emit UV light from an UV source (21) to at least one of the milk containers (30) and at least one agitation means adapted to provide movement of the milk in the milk container (30) during UV exposure of the at least one milk container (30),
- a milk container output module (14) to discharge the UV irradiated milk containers (30) and
- a displacement means (5) to move the milk containers (30) from one of the aforementioned modules to another one of the aforementioned modules.

2. The milk treatment apparatus (1) according to claim 1, **characterized in that** the apparatus (1) further comprises one or more of the following additional modules:
- a weighing module (12) to obtain information on the weight of the milk in the milk container (30) ,
- a labelling module (13) adapted to apply visible markings, labels or other identification means onto the milk containers (30), wherein other identification means comprise RFID tags, QR codes, bar codes, alphanumeric information readable by humans and wherein the applied labels preferably comprise at least one of the following data:
∘ a unique ID,
∘ the date of treatment and/or expression,
∘ the applied UV irradiation dose,
∘ use-by date,
∘ weight,
∘ donor ID and/or recipient ID,
∘ the composition of the milk,
∘ block chain related information
- a sample collection module adapted to collect samples from a predeterminable milk container (30),
- a control module adapted to monitor and to control selectable modules of the automated UV batch treatment apparatus (1).

3. The milk treatment apparatus (1) according to claim 1 or 2, **characterized in that** the input module further comprises milk container identification means to validate milk containers (30) for UV irradiation treatment.

4. The milk treatment apparatus (1) according to claim 1 or 2, **characterized in that** the input module further comprises thawing means (26) adapted to defrost milk contained in the milk container (30).

5. The milk treatment apparatus (1) according to any of the preceding claims, **characterized in that** the pooled milk input and filling module (10) further comprises air evacuation and/or replacement means and sealing means, wherein the evacuation means is adapted to evacuate the milk containers (30) and/or to replace the air in the milk containers (30) by an inert or protective gas and wherein the sealing means is arranged to seal the filled milk containers (30).

6. The milk treatment apparatus (1) according to any of the preceding claims, **characterized in that** the UV source of the UV treatment module (4) is a low-pressure mercury vapor lamp, at least one UV light-emitting diode or a field emission lighting technology, wherein the UV wavelength is preferably selected in a range between 200 nm and 280 nm and most preferably at a wavelength of 254 nm +/-15 nm.

7. The milk treatment apparatus (1) according to any of the preceding claims, **characterized in that** the UV treatment module (4) further comprises at least one of the following means:
- a shutter (22) which is arranged between the UV irradiation means and the milk containers (30) to control exposure of each milk container (30) to UV irradiation,
- a user protection means to protect users from UV irradiation,
- a cooling means (23) to cool the milk in the milk container (30) or the UV source,
- a measurement means to monitor at least one of the following parameters:
∘ radiation of the UV source,
∘ temperature,
∘ time of exposure,
∘ total run time of UV source.

8. The milk treatment apparatus (1) according to claim 2, **characterized in that** the sample collection module comprises at least one of the following means:
- a sampling means (40) adapted to create a sample by sealing off and separating a defined sample compartment of the milk container (30),
- a sample analyzing means (41) adapted to analyze at least one of the following milk components: fats, carbohydrates, proteins, residual microorganisms or total solids.

9. The milk treatment apparatus (1) according to any of the preceding claims, **characterized in that** at least the container UV treatment module (4) and the displacement means (5) are contained in a protective cabinet (2) and that the container input or the pooled milk input and filling module (10) and the milk container output module (14) are provided on an interface of the protective cabinet (2).

10. A container UV treatment device for use as a container UV treatment module (4) in an apparatus according to any of the preceding claims, **characterized in that** the device comprises UV irradiation means adapted to emit UV light from an UV source (21) to at least one milk bag (30), a support adapted to support the at least one milk bag (30) during the UV treatment and agitation means adapted to exert an outer pressure on the milk bag (30) altering the shape of the milk bag (30) to induce a movement of the milk contained in the milk bag (30).

11. Method for treatment of human milk by UV irradiation comprising irradiating the milk in milk containers (30) by UV light, **characterized in that** the method is an automated batch treatment of milk comprising the steps:
- feeding milk contained in milk containers (30) for UV irradiation treatment into a UV batch treatment apparatus (1) or filling liquid milk into milk containers (30) for UV irradiation treatment,
- UV irradiation treatment of the milk in the container (30)while agitating the milk in the milk container (30) and
- discharging the treated milk containers (30) from the UV batch treatment apparatus (1).

12. Method for treatment of milk by UV irradiation according to claim 11, **characterized by** further comprising at least one of the following steps:
- controlling exposure of the milk to UV light during irradiation,
- weighing the milk containers (30),
- applying visible markings, labels or other identification means on the milk containers (30), wherein other identification means comprise RFID tags, QR codes, bar codes, alphanumeric information readable by humans,
- collecting a sample from a selected milk container (30) after the UV irradiation treatment,
- monitoring and controlling selectable modules of the automated UV batch treatment apparatus (1) and preferably transmitting data to further interfaces, databases and/or computers.

13. A UV treatment milk container (30) comprising
- a milk container (30) body defining an inner volume (34), **characterized in that** the container (30) body is a bag constructed at least in part of a UV-C transmissible sheet, preferably a sheet transmissible in a UV-C range between 200 nm and 280 nm and most preferably at a wavelength of 254 nm +/- 15 nm.

14. The UV treatment milk container (30) according to claim 13, **characterized in that** the UV treatment milk container (30) further comprises at least one of the following features:
- a pouring spout (31), wherein the spout (31) arranged to
∘ transfer liquid into or out of the inner volume (34) of milk container (30) body,
∘ adopted to be sealed or sealed off,
∘ insert or extract the agitation means,
- the bag defines a main inner volume (34) and a sample volume (35), wherein the main inner volume (34) is separated from the sample volume (35) by two weld lines (36) and a separation line arranged there between,
- a sample collection module integrated in the spout (31),
- a label area, wherein the label area is preferably arranged to provide human readable and/or machine readable information,
- a stand formed by a bottom of the milk bag (30),
- a stand and stack, wherein the stand is preferably constructed as a transport box and/or to manipulate the content of a filled UV treatment milk bag (30) and wherein the stack is preferably constructed as a storage box,
- the spout (31) is constructed as an interface adopted to be connected to a feeding system and/or a breast pump (9) system,
- the spout (31) is sealed or sealed off by a visible sealing means (37),
- the spout (31) further comprises a septum, wherein the septum is puncturable and self sealing after puncture,
- an outer weld line (36) connecting the two sheet layers films to define enclosing at least in part a milk container (30) compartment with rounded edges.

15. The UV treatment milk container (30) according to claim 13 or 14, **characterized in that** the milk bag (30) is made by at least one sheet of a flexible polymer material having a thickness in a range between 50 µm and 200 µm, preferably in a range between 70 µm and 120 µm and most preferably at 100 µm +/-10 µm.
